# EUROPÄISCHE PATENTSCHRIFT

(11) **EP 0 470 492 B1**
(45) Veröffentlichungstag und Bekanntmachung des Hinweises auf die Patenterteilung: **10.08.1994**
(21) Anmeldenummer: 91112841.1
(22) Anmeldetag: 31.07.1991
(51) Int. Cl.: H01M 4/48, H01M 10/40, H01M 10/39, H01M 4/02

(54) **Elektrochemisches Sekundärelement**
Electrochemical secondary element
Elément électrochimique secondaire

(30) Priorität: 09.08.1990 DE 4025208
(43) Veröffentlichungstag der Anmeldung: 12.02.1992
(73) Patentinhaber: VARTA Batterie Aktiengesellschaft, D-30405 Hannover (DE)
(72) Erfinder: Bittihn, Rainer, Dr., W-6270 Idstein (DE); Hoge, Detlev, Dr., W-6233 Kelkheim/Ts (DE); Herr, Rudolf, Dr., W-6233 Kelkheim/Ts (DE)
(74) Vertreter: Kaiser, Dieter Ralf, Dipl.-Ing.

(56) Entgegenhaltungen:
- EP-A- 0 390 185
- FR-A- 2 469 013
- US-A- 4 101 716
- ZEITSCHRIFT FÜR PHYSIKALISCHE CHEMIE NEUE FOLGE Bd. 98, 1975, WIESBADEN Seiten 351 - 364 J. BRENET, J.F. KOENIG 'the influence of the preparation and composition of spinel structure cobaltites on their electrochemical reduction'

## Beschreibung

Die Erfindung betrifft ein elektrochemisches Sekundärelement mit einer positiven Elektrode, einer negativen Elektrode und einem nichtwässrigen Elektrolyten, wobei das Material der Elektroden jeweils eine offene Gitter- oder Skelettstruktur bildet, die es befähigt, elektrochemisch aktive Kationen im Wechsel von Ladung und Entladung als Wirtssubstanz in sich aufzunehmen und wieder abzugeben.

Ein wichtiger Anstoß zu der Erfindung war die in jüngster Zeit stark gestiegene Nachfrage nach Batterien hoher Energiedichte und geringen Gewichts, wie sie insbesondere bei den Lithiumsystemen bereits verwirklicht sind, die aber auch wiederaufladbar sein sollen. Dies setzt u. a. voraus, daß sich die Elektroden im Kontakt mit dem Elektrolyten chemisch stabil verhalten.

Lithiumelektroden genügen selbst in organischen Elektrolyten mit aprotischen Lösungsmitteln solchen Anforderungen auf die Dauer nicht, da ihrer Zyklenstabilität bekanntermaßen enge Grenzen gesetzt sind.

Diesem Mangel läßt sich dadurch abhelfen, daß man Lithium mit einem Erdalkalimetall oder Erdmetall, vorzugsweise Aluminium, legiert. Einem verminderten Energieinhalt der Legierungselektrode stehen dabei eine bessere Wiederaufladbarkeit und eine höhere mechanische Festigkeit als Vorteile gegenüber.

Ein anderer Weg, den man in den letzten Jahren eingeschlagen hat, um die Reversibilität der Lithiumelektrode zu verbessern; führt über Intercalationsverbindungen. In diesem Fall bestehen die Elektroden einer Zelle aus einem Material von bestimmter Struktur, welche für eine im Elektrolyten vertretene, elektrochemisch aktive Ionenspezies ein geeignetes Wirtsgitter bildet, von welchem diese -im aktuellen Fall Li⁺- bei Anlegen einer äußeren Spannung, je nach Polung, entweder eingelagert oder ausgelagert wird. Bei der Entladung wird die erzeugte elektromotorische Kraft, die sich in dem Bestreben äußert, die aufgezwungene Intercalation bzw. Deintercalation wieder rückgängig zu machen, zur Stromentnahme genutzt.

Als ein in diesem Sinne mit Li⁺-Ionen dotierfähiges und für beide Elektrodenpolaritäten verwendbares Elektrodenmaterial hat sich von Anfang an Kohlenstoff mit bestimmten strukturellen Auflagen erwiesen. Bei den Elektroden einer aus der DE-OS 32 31 243 bekannten elektrochemischen Batterie handelt es sich z. B. um solche aus Aktivkohle-Formprodukten, gemäß EP-A 165 047 ist das Kohlenstoffmaterial ein Pseudographit von bestimmter Kristallitgröße und mit einem aufgeweiteten Gitter in Richtung der c-Achse, der durch Pyrolyse von aromatischen Kohlenwasserstoffen gewonnen wird. Bei einer aus der EP-A-201 038 bekannten Sekundärbatterie mit der Lösung eines Li-Salzes in einem nichtwässrigen Lösungsmittel als Elektrolyt bildet ein derartiger Pseudographit das Material der negativen Elektrode und ein ebenfalls dotierbares Metallchalkogenid das Material der positiven Elektrode.

Die Intercalationsfähigkeit von Metallchalkogeniden, z. B. von WO₃ oder TiS₂, ferner von bestimmten synthetischen Mischoxiden gemäß US-PS 4 668 595 liegt in deren ausgeprägten Schichtengittern begründet. Aus der gleichen Druckschrift ist auch ein chemisch stabiles n-Typ Material in Gestalt eines Kohleprodukts bekannt, das man aus hochmolekularen Bestandteilen des Erdöls durch einen kontrollierten Verkokungsprozeß gewinnt, wobei im Hinblick auf eine Incorporierung von Metallkationen, insbesondere Li⁺, eine gewisse Fehlordnung der Feinstruktur bei diesem Produkt angestrebt wird.

Nach US-PS 4 507 371 schließlich können bei wiederaufladbaren Zellen wahlweise als Kathode, als Anode und, wenn keine Elektronenleitfähigkeit vorhanden, sogar als Elektrolyt solche Wirtsoxide oder -sulfide eingesetzt werden, die kristallchemisch den Spinellen zuzuordnen sind. Diese Spinellstrukturen verhalten sich weitgehend stabil oder lassen sich gegebenenfalls durch Einführung bestimmter Kationen wie Mg²⁺, Zn²⁺, Cd²⁺ stabilisieren.

Insbesondere lassen sich gemäß DE-OS 37 36 366 durch Umsetzen von Mangandioxid, MnO₂, mit Lithiumsalzen bei nur mäßig hohen Temperaturen von 300 °C bis 400 °C reine Lithium-Manganspinelle erzeugen, in deren Gitter die Li⁺-Ionen eine hohe Beweglichkeit besitzen, was die Verwendbarkeit solcher Spinelle als aktives Kathodenmaterial gerade für wiederaufladbare galvanische Elemente begründet. Sie lassen sich im geladenen Zustand als LiMn₂O₄ und im entladenen Zustand als LiMnO₂ formulieren. Durch eine Säurebehandlung läßt sich der Lithium-Mangan spinell ohne Änderung seiner Spinellstruktur, lediglich mit einer geringfügigen Kontraktion des kubischen Gitters, in eine lithiumarme Verbindung überführen.

Bei allen bisher bekannten Sekundärelementen, deren Kathode aus einem Material mit Spinellstruktur besteht. ist die damit gekoppelte Anode entweder eine Lithiumlegierung, ein mit Lithiumionen dotiertes elektrischleitendes Polymer wie Polyacetylen oder Polyparaphenylen, eine Zwischenschichtverbindung vom Typ TiS₂, die Lithiumionen in den Zwischenschichthohlräumen aufweist, oder sie ist ebenso wie die Kathode aus einem Spinell gebildet.

Der Erfindung liegt die Aufgabe zugrunde, ein elektrochemisches Sekundärelement hoher Energiedichte bereitzustellen, dessen Lade- / Entlademechanismus auf einer wechselseitigen Intercalation und Deintercalation von vorzugsweise Li⁺-Ionen in den Materialien von positiver und negativer Elektrode beruht, wobei die Elektrodenstrukturen eine gute chemische Resistenz gegenüber dem Elektrolyten und eine hohe Zyklenstabilität gewährleisten sollen.

Die Aufgabe wird erfindungsgemäß mit einem Sekundärelement gelöst, wie es im Patentanspruch 1 definiert ist.

Es wurde gefunden, daß eine Sekundärzelle in hohem Maße die gestellten Anforderungen erfüllt, deren positive Elektrode ein oxidisches Material als Wirtssubstanz umfaßt, das eine Feinstruktur wie diejenige der Spinelle aufweist und dessen Zusammensetzung der allgemeinen Formel MₓMn_{y}O_{z} entspricht mit
- M =: Kation mindestens eines Metalls aus der Gruppe IIa, IVa, Va, IVb, Vb, VIb, oder VIIIb;
- x =: Zahl zwischen 0 und 0,6;
- y =: Zahl zwischen 1,4 und 2,0 und einem Verhältnis y : z zwischen 0.3 und 0,6,

wobei durch Aufnahme eines Gastes A, bestehend aus dem Kation eines Ia-Gruppenelements, in die Wirtsstruktur sich eine Elektrode der allgemeinen Zusammensetzung A_{q}MₓMn_{y}O_{z} vom Spinell-Typ ergibt, in welcher A entsprechend einem Laufparameter q variiert, und daß die Wirtssubstanz der negativen Elektrode ein durch kontrollierte thermische Zersetzung aus organischen Verbindungen erhaltenes Kohleprodukt ist.

Das von beiden Elektrodenstrukturen intercalierbare elektrochemisch aktive Kation A ist vorzugsweise Li⁺.

Erfindungsgemäß ist die positive Elektrode des neuen Sekundärelements bezüglich der Zusammensetzung im wesentlichen ein Lithium-Manganspinell, Li_{q}MₓMn_{y}O_{z}, bei welchem nach Maßgabe der Parameter 0 < x < 0,6 und 1,4 < y 2,0 bis zu etwa 30 % des Mangans durch andere Metalle M ersetzt sein können. Ersatzmetalle sind namentlich die Hauptelemente Mg, Sn, Pb, Sb und Bi aus den Gruppen IIa, IVa und Va des Periodensystems sowie die Übergangselemente Ti, Zr, Hf, V, Nb, Ta, Cr, Mo, W, Fe, Co und Ni aus der Gruppe IVb, Vb, VIb resp. VIIIb.

Der teilweise Ersatz von Mn-Ionen durch M-Kationen im Spinellgitter bedingt u. U. gewisse Defekte der Gitterstruktur mit der Folge, daß das Wirtsoxid durchaus nicht immer, eigentlich sogar nur im Ausnahmefall, eine stöchiometrische Verbindung ist und daß die M-Kationen auch mit anderen Valenzen als die Mn-Ionen in das Gitter eingebaut werden. Dementsprechend besitzen die Parameter x, y, und z eine gewisse Variationsbreite, liegen jedoch für jede einzelne Verbindung fest. Diffundiert nun die elektrochemisch aktive Ionenspezies A in die Raum- oder Skelettstruktur des Wirtsoxids unter dem Einfluß eines elektrischen Feldes ein, so kann sich die Konzentration von A resp. Li⁺ in einem weiten Bereich ändern.

Der vorzugsweise Zahlenwert von q soll erfindungsgemäß zwischen 0 und 1,3 liegen. Durch diese Begrenzung sind erfindungsgemäße Kathoden im Vergleich etwa zu der aus der US-PS 4 507 371 bekannten Li₁₊ₓMn₂O₄ - Phase (x entspricht hier q) als lithiumarme Manganspinelle charakterisiert, welche sich aber gerade dadurch auszeichnen, daß der weit überwiegende Teil der ihnen innewohnenden Kapazität bei Potentialen > 3 Volt vs. Li/Li⁺ entnommen werden kann. Außerdem erfolgt die Intercalation der Li⁺-Ionen mit einem hohem Maß an Reversiblität. Als ein besonders günstiges Material für die positive Elektrode eines Sekundärelements gemäß Erfindung hat sich, wie noch gezeigt wird, ein kobalthaltiger Lithium-Manganspinell der Zusammensetzung LiCo_{0,24}Mn_{1,76}O_{4,065} erwiesen.

Als Gerüstmaterial der negativen Elektrode, dem dort die Rolle der Wirtssubstanz für die elektrochemisch aktive Kationenspezies A zufällt, dient erfindungsgemäß ein Kohleprodukt, welches aus ausgewählten organischen Verbindungen durch einen Verkokungs- bzw. Pyrolyseprozeß hergestellt ist.

Ein interessantes Verfahren in diesem Zusammenhang ist eine hinhaltende Verkokung, der sogenannte "Delayed coking process". Hierbei werden Rückstände aus der Rohölraffination als Einsatzprodukt in einen Ofen geleitet und auf ca. 500 °C erhitzt, die Durchsatzgeschwindigkeit bzw. Verweilzeit in dem Ofen jedoch so eingestellt, daß die Koksablagerung erst in einer nachgeschalteten Kokskammer erfolgt, wobei diese Kammer alternierend mit einer zweiten Kammer betrieben wird. Das Herauslösen des Kokses aus den Kammern geschieht, nachdem als Nebenprodukte entstandene flüchtige Kohlenwasserstoffe durch Dampfeinspeisung ausgetrieben worden sind, mit Hilfe eines hydraulischen Schneidgerätes.

Ein für den erfindungsgemäßen Zweck besonders geeignetes Kohleprodukt ist sogenannter Nadelkoks, ein bereits in der Stahlindustrie zur Herstellung von Hochqualitäts-Graphitelektroden für elektrische Schmelzöfen verwendeter Spezialkoks. Nadelkoks ist ebenfalls ein Erzeugnis der beschriebenen hinhaltenden Verkokung, jedoch mit Einsatzprodukten wie thermische Teere, Decantöle oder Steinkohlenteerpeche, denen hochgradig aromatische Kohlenwasserstoffverbindungen zugrunde liegen.

Für nähere Informationen zur Verfahrenstechnik sowie über typische Nadelkoks-Spezifikationen sei hier auf H. M. Feintuch, J. A. Bonilla und R. L. Godino in Handbook of Petroleum Refining Processes, R. A. Meyers, ed., Mc. Grawhill, New York S. 7.1 - 7.61 (1986), verwiesen.

Der nichtwäßrige Elektrolyt eines Sekundärelements gemäß der Erfindung kann flüssig, pastös oder fest sein. Er umfaßt vorzugsweise ein Li-Salz mit einem organischen Solvens und liegt vorzugsweise in flüssiger Form vor.

Bei den Li-Salzen handelt es sich um bekannte Elektrolytsalze mit einem der Anionen ClO₄-,BF₄-, AsF₆-, CF₃SO₃-, PF₆-, J-, oder AlClO₄-. Als wasserfreies Solvens für diese Salze kann sowohl einzeln als auch im Gemisch mit anderen ein organisches Lösungsmittel aus der Gruppe Tetrahydrofuran, 2-Methyltetrahydrofuran, Acetonitril, Propionitril, 4-Methyl-2-pentanon, Butyronitril, Valeronitril, Benzonitril, 1,2-Dichlorethan, γ-Butyrolacton, Dimethoxyethan, Methylformiat, Propylencarbonat, Ethylencarbonat, Vinylencarbonat, Dimethylformamid, Sulfolan, 3-Methylsulfolan, Trimethylphosphat dienen.

In einer vorteilhaften Ausgestaltung der erfindungsgemäßen Sekundärzelle ist der Elektrolyt durch anorganische Sauerstoffverbindungen wie SiO₂, Al₂O₃, TiO₂, MgO, B₂O₃, Na₂SO₄ oder AlPO₄, die In oberflächenreichen Formen mit dem Lösungsmittel gelieren, immobilisiert. Insbesondere eignen sich aprotische Lösungsmittel wie Propylencarbonat, Acetonitril, γ-Butyrolacton, Nitromethan, Tetrahydrofuran, Methyltetrahydrofuran, Dimethoxyethan oder Dioxolan für diesen Zweck.

Die gebildeten Elektrolyte sind von pastöser bis halbfester Konsistenz. Eine andere Möglichkeit der Festlegung des Elektrolyten bietet sich dadurch an, daß Alkalisalze mit Polyethylenoxid Polyether-Komplexe bilden, welche die Eigenschaft eines festen Ionenleiters besitzen. Das Li-Salz als Elektrolytkomponente ist in diesem Falle Bestandteil einer polymeren Elektrolytmatrix, mit Polyethylenoxid als Grundgerüst.

Weiterhin kommen als Festelektrolyte keramische Alkaliionenleiter infrage.

Schließlich kann der Elektrolyt des erfindungsgemäßen Sekundärelements aus geschmolzenen Salzen bestehen. Unter diese fallen beispielsweise das bei 150 °C schmelzende LiAlCl₄ oder eine eutektische Mischung aus LiCl und KCl, deren Schmelzpunkt bei 352 °C liegt. Besonders vorteilhafte Elektrolyte sind jedoch sogenannte Raumtemperatur-Salzschmelzen, die hier als Lösungsmittel für ein übliches Li-Leitsalz fungieren. Als Beispiele seien die nachstehenden Salzmischungen genannt: 1 methyl-3-ethylimidazoliumchlorid/AlCl₃, N-butylpyridiniumchlorid/AlCl₃, Phenyltrimethylammoniumchlorid/AlCl₃.

Weder die Elektrodenmaterialien noch der Elektrolyt des erfindungsgemäßen Sekundärelements stellen an die Konstruktion praktischer Zellen, die sich auch im Batterieverbund betreiben lassen, besondere Bedingungen. Die Elektroden können beispielsweise in kompaktierter Form vorliegen, was sie für die Montage leicht handhabbar macht, und gegebenenfalls noch durch ein Bindemittel verfestigt sein. Bei Engeinbau und in Verbindung mit flüssigen Elektrolyten können die Elektroden durch ein in Lithiumzellen allgemein übliches Separatormaterial wie beispielsweise Polypropylen voneinander elektrisch isoliert werden.

Sehr vorteilhaft ist jedoch eine Armierung der Elektroden mit elektrisch leitenden Metallträgerstrukturen, insbesondere, wenn diese zugleich die Ableiter-funktion übernehmen. In einer besonders günstigen Ausführungsform des erfindungsgemäßen Sekundärelements besitzt die negative Elektrode einen Ableiter aus Nickel oder Edelstahl und die positive Elektrode einen Ableiter aus Aluminium oder Edelstahl.

Anhand dreier Figuren werden die Vorteile der Erfindung, die sich aus elektrischen Funktionstests ergaben, augenfällig gemacht.

Figur 1 zeigt den Spannungsverlauf während eines Lade-/Entladezyklus für eine positive Spinell-Elektrode, gemessen gegen Li/Li⁺ als Gegenelektrode.

Figur 2 zeigt die Kapazitätsentwicklung von zwei erfindungsgemäßen positiven Spinell-Elektroden beim zyklischen Laden/Entladen über 15 Zyklen, ebenfalls gegen eine Li/Li⁺-Elektrode.

Figur 3 zeigt den charakteristischen Spannungsverlauf während eines Lade-/Entladezyklus für eine komplette erfindungsgemäße Sekundärzelle.

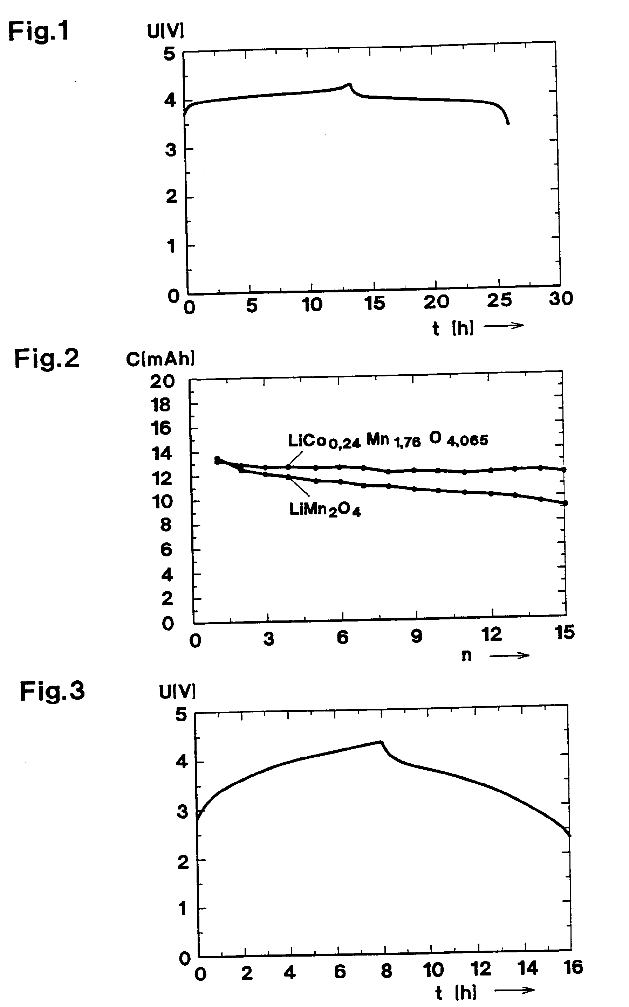

Die Spannungskurve der Figur 1 wurde mit einem reinen Lithium-Manganspinell der Zusammensetzung LiMn₂O₄ aufgenommen, welcher sich aus der allgemeinen Formel Li_{q}MₓMn_{y}O_{z} für den Fall q = 1, x = 0 und y = 2 ableitet. Der erfindungsgemäße niedrige Lithiumgehalt (0 < q < 1,3) ist hier für die außergewöhnlich hohe Spannungslage von ca. 4 Volt während der Entladung verantwortlich.

Gemäß Figur 2 zeichnen sich erfindungsgemäße Spinell-Kathoden im Zyklenbetrieb durch einen nur geringen Kapazitätsschwund (Kapazität C in mAh) im Zyklenbetrieb (n = Zyklenzahl) aus. Dabei wird der LiMn₂O₄-Spinell hinsichtlich der Zyklenstabilität von der vorerwähnten LiCo_{0,24}Mn_{1,76}O_{4,065}-Modifikation noch übertroffen. Dieses günstige Verhalten resultiert unmittelbar aus der fast ungehinderten Aufnahme und Abgabe des Li⁺-Gastes durch das Spinell-Wirtsgitter, d. h. aus einer nahezu reversiblen Intercalation.

Aus Figur 3 ist eine typische Lade-/Entladespannungskurve für eine erfindungsgemäße Sekundärzelle mit positiver LiMn₂O₄-Elektrode und negativer Li⁺-intercalierender Kohleelektrode ersichtlich. Danach läßt sich der bei weitem größte Teil der Kapazität -wie in den eben beschriebenen Fällen mit einem Strom i = 0,1 CA (10-stündig)- bei einer von 4 Volt auf 3 Volt abfallenden Zellenspannung entladen.

Als Elektrolyt war stets eine 1,0 normale Lösung von LiAsF₆ in Propylencarbonat eingesetzt.

## Patentansprüche

1. Elektrochemisches Sekundärelement mit einer positiven Elektrode, einer negativen Elektrode und einem nichtwässrigen Elektrolyten, wobei das Material der Elektroden jeweils eine offene Gitter- oder Skelettstruktur bildet, die es befähigt, elektrochemisch aktive Kationen im Wechsel von Ladung und Entladung als Wirtssubstanz in sich aufzunehmen und wieder abzugehen, dadurch gekennzeichnet, daß die Wirtssubstanz der positiven Elektrode ein oxidisches Material mit einer Struktur vom Spinelltyp ist, dessen Zusammensetzung der allgemeinen Formel MₓMn_{y}O_{z} entspricht mit
M = Kation mindestens eines Metalls aus der Gruppe IIa, IVa, Va, IVb, Vb, VIb, oder VIIIb;
x = Zahl zwischen 0 und 0,6;
y = Zahl zwischen 1,4 und 2,0 und einem Verhältnis y : z zwischen 0.3 und 0,6,
wobei durch Aufnahme eines Gastes A, bestehend aus dem Kation eines Ia-Gruppenelements, in die Wirtsstruktur sich eine Elektrode der allgemeinen Zusammensetzung A_{q}MₓMn_{y}O_{z} vom Spinell-Typ ergibt, in welcher A entsprechend einem Laufparameter q variiert, und daß die Wirtssubstanz der negativen Elektrode ein aus organischen Verbindungen durch Pyrolyse gebildetes Kohleprodukt ist.

2. Elektrochemisches Sekundärelement nach Anspruch 1, dadurch gekennzeichnet, daß A von Li⁺ gebildet ist.

3. Elektrochemisches Sekundärelement nach Anspruch 2, dadurch gekennzeichnet, daß der Laufparameter q zwischen 0 und 1,3 liegt.

4. Elektrochemisches Sekundärelement nach einem der Ansprüche 1 bis 3, dadurch gekennzeichnet, daß das die Wirtssubstanz der negativen Elektrode bildende Kohleprodukt ein Nadelkoks ist.

5. Elektrochemisches Sekundärelement nach einem der Ansprüche 1 bis 4, dadurch gekennzeichnet, daß der Elektrolyt ein Li-Salz mit einem organischen Solvens umfaßt.

6. Elektrochemisches Sekundärelement nach Anspruch 5, dadurch gekennzeichnet, daß der Elektrolyt durch eine polymere Matrix als Solvens oder durch Zusatz anorganischer Substanzen, die in dem Solvens gelieren, immobilisiert ist.

7. Elektrochemisches Sekundärelement nach Anspruch 6, dadurch gekennzeichnet, daß das polymere Grundgerüst Polyethylenoxid ist.

8. Elektrochemisches Sekundärelement nach Anspruch 6, dadurch gekennzeichnet, daß die Gelierungsmittel aus der Gruppe SiO₂, Al₂O₃, TiO₂, MgO, B₂O₃, Na₂SO₄ und AlPO₄ ausgewählt sind.

9. Elektrochemisches Sekundärelement nach einem der Ansprüche 1 bis 4, dadurch gekennzeichnet, daß der Elektrolyt aus einer ein Lithiumsalz enthaltenden Hochtemperatursalzschmelze besteht.

10. Elektrochemisches Sekundärelement nach einem der Ansprüche 1 bis 4, dadurch gekennzeichnet, daß der Elektrolyt aus der Lösung eines Lithiumsalzes in einer Raumtemperatursalzschmelze besteht.

## Claims

1. Electrochemical secondary cell having a positive electrode, a negative electrode and a non-aqueous electrolyte, the electrode material in each case forming an open lattice or skeletal structure which enables it, as host substance, to absorb, and to release again, electrochemically active cations with charging and discharging alternating, characterised in that the host substance of the positive electrode is an oxidic material having a spinel-type structure, whereof the composition corresponds to the general formula MₓMn_{y}O_{z} where
M = cation of at least one metal taken from the groups IIa, IVa, Va, IVb, Vb, VIb or VIIIb;
x = a number between 0 and 0.6;
y = a number between 1.4 and 2.0, the ratio y : z being between 0.3 and 0.6,
absorption of a guest A, comprising the cation of a group Ia element, into the host structure resulting in an electrode of the general composition A_{q}MₓMn_{y}O_{z} of the spinel type, in which A varies in accordance with an operating parameter q, and in that the host substance of the negative electrode is a carbon product formed from organic compounds by pyrolysis.

2. Electrochemical secondary cell according to Claim 1, characterised in that A is formed from Li⁺.

3. Electrochemical secondary cell according to Claim 2, characterised in that the operating parameter q is between 0 and 1.3.

4. Electrochemical secondary cell according to one of Claims 1 to 3, characterised in that the carbon product forming the host substance of the negative electrode is a needle coke.

5. Electrochemical secondary cell according to one of Claims 1 to 4, characterised in that the electrolyte includes an Li salt with an organic solvent.

6. Electrochemical secondary cell according to Claim 5, characterised in that the electrolyte is immobilised by a polymeric matrix as solvent or by addition of inorganic substances which gel in the solvent.

7. Electrochemical secondary cell according to Claim 6, characterised in that the polymeric basic skeleton is polyethylene oxide.

8. Electrochemical secondary cell according to Claim 6, characterised in that the gelling agents are selected from the group comprising SiO₂, Al₂O₃, TiO₂, MgO, B₂O₃, Na₂SO₄ and AlPO₄.

9. Electrochemical secondary cell according to one of Claims 1 to 4, characterised in that the electrolyte comprises a high-temperature molten salt containing a lithium salt.

10. Electrochemical secondary cell according to one of Claims 1 to 4, characterised in that the electrolyte comprises the solution of a lithium salt in a room temperature molten salt.

## Revendications

1. Elément électrochimique secondaire avec une électrode positive, une électrode négative et un électrolyte non aqueux, élément dans lequel le matériau des électrodes forme respectivement une structure ouverte ou une structure rigide, qui est susceptible, en tant que substance réceptrice, d'absorber et de rétrocéder à nouveau dans l'alternance de charge et de décharge, des cations électrochimiquement actifs, élément secondaire caractérisé en ce que la substance réceptrice de l'électrode positive est un matériau obtenu par voie d'oxydation avec une structure de type spinelle, dont la composition correspond à la formule générale MxMnyOz avec :
M = cation d'au moins un métal du groupe IIa, IVa, Va, IVb, Vb, VIb ou VIIIb,
x = nombre entre 0 et 0,6
y = nombre entre 1,4 et 2,0 avec un rapport y : Z entre 0,3 et 0,6.
tandis que par réception d'un hôte A, constitué du cation d'un élément du groupe Ia, dans la structure réceptrice, une électrode de composition générale AqMxMnyOz et de type spinelle est obtenue, dans laquelle A varie de façon correspondante à un paramètre variable q, et en ce que la substance réceptrice de l'électrode négative est un produit carboné formé par pyrolyse à partir de combinaisons organiques.

2. Elément électrochimique secondaire selon la revendication 1, caractérisé en ce que A est constitué par Li⁺.

3. Elément électrochimique secondaire selon la revendication 2, caractérisé en ce que le paramètre variable q se situe entre 0 et 1,3.

4. Elément électrochimique secondaire selon une des revendications 1 à 3, caractérisé en ce que le produit carboné formant la substance réceptrice de l'électrode négative est un coke aciculaire.

5. Elément électrochimique secondaire selon une des revendications 1 à 4, caractérisé en ce que l'électrolyte comprend un sel de lithium avec un solvant organique.

6. Elément électrochimique secondaire selon la revendication 5, caractérisé en ce que l'élecrolyte est immobilisé par une matrice polymère jouant le rôle de solvant, ou bien par adjonction de substances inorganiques qui se gélifient dans le solvant.

7. Elément électrochimique secondaire selon la revendication 6, caractérisé en ce que la structure polymère de base est de l'oxyde de polyéthylène.

8. Elément électrochimique secondaire selon la revendication 6, caractérisé en ce que les moyens de gélification sont choisis dans le groupe SiO₂, Al₂O₃, TiO2, MgO, B₂O₃, Na₂SO₄ et AlPO₄.

9. Elément électrochimique secondaire selon une des revendications 1 à 4, caractérisé en ce que l'électrolyte est constitué par un sel fondu à haute température contenant un sel de lithium.

10. Elément électrochimique secondaire selon une des revendications 1 à 4, caractérisé en ce que l'électrolyte est constitué par la solution d'un sel de lithium dans un sel fondu à la température ambiante.
